Europäisches Patentamt

European Patent Office

Office européen des brevets

(19)

(11) Numéro de publication : **0 308 282 B1**

(12) ## FASCICULE DE BREVET EUROPEEN

(45) Date de publication du fascicule du brevet :
24.07.91 Bulletin 91/30

(51) Int. Cl.⁵ : **G01D 5/22, G21C 17/12**

(21) Numéro de dépôt : **88402090.0**

(22) Date de dépôt : **11.08.88**

(54) **Capteur de position sans contact mécanique.**

(30) Priorité : 28.08.87 FR 8712064
28.08.87 FR 8712066

(43) Date de publication de la demande :
22.03.89 Bulletin 89/12

(45) Mention de la délivrance du brevet :
24.07.91 Bulletin 91/30

(84) Etats contractants désignés :
BE ES GB IT NL

(56) Documents cités :
EP-A- 0 177 007
DE-A- 3 410 292

(56) Documents cités :
DE-B- 1 213 310
GB-A- 883 781
US-A- 3 890 607
US-A- 3 893 090

(73) Titulaire : **MERLIN GERIN**
**Rue Henri Tarze**
**F-38050 Grenoble Cédex (FR)**

(72) Inventeur : **Sellier, Pierre**
**Merlin Gerin Sce. Brevets**
**F-38050 Grenoble Cedex (FR)**

(74) Mandataire : **Kern, Paul et al**
**Merlin Gerin Sce. Brevets 20, rue Henri Tarze**
**F-38050 Grenoble Cédex (FR)**

Jouve, 18, rue Saint-Denis, 75001 PARIS

## Description

L'invention concerne un dispositif de détection, sans aucun contact mécanique, de la position d'un élément mobile suivant une trajectoire prédéterminée, comportant un capteur de position comportant un enroulement primaire alimenté par une source de courant alternatif et un enroulement secondaire couplé inductivement avec ledit enroulement primaire, ledit élément mobile présentant une partie magnétique susceptible de modifier le couplage inductif entre lesdits enroulements au cours de son déplacement, l'enroulement secondaire étant constitué par trois groupes de bobines élémentaires disposées et connectées de manière à engendrer trois signaux de sortie distincts destinés à être appliqués à un dispositif de traitement et dont la combinaison logique permet de déterminer la position dudit élément mobile.

Les dispositifs détecteurs de position de ce type sont utilisés dans de nombreux domaines et ils présentent un grand intérêt lorsque l'élément mobile est dans un milieu fermé dans lequel on ne peut introduire de composants mécaniques ou électriques en raison des propriétés de ce milieu. Une application particulière de tels dispositifs consiste à contrôler la position des barres de commande dans les réacteurs nucléaires.

Le brevet français No. 2.169.437 et son certificat d'addition No. 2.182.400 décrivent tous deux des capteurs de position sans contact mécanique du type à transformateur dans lesquels l'enroulement secondaire est constitué par des couples de bobines, disposés régulièrement le long de la trajectoire de l'élément mobile et délivrant chacun un signal différentiel de valeur nulle pour toute position d'élément mobile engendrant un même couplage inductif entre l'enroulement primaire et les deux bobines dudit couple.

Dans le certificat d'addition précité, les bobines de l'enroulement secondaire sont disposées de manière à fournir une information numérique codée, par exemple en code GRAY, à un dispositif de traitement relié au capteur.

Pour obtenir une précision suffisante avec un tel dispositif, il est nécessaire d'augmenter le nombre de bits de l'information codée, et en conséquence d'augmenter le nombre de fils de sortie du capteur, ce qui pose des problèmes de connexion.

La présente invention a pour but d'obtenir une précision supérieure à celle qu'il serait possible d'obtenir avec une information codée sur 5 bits dans un dispositif selon le certificat d'addition précité tout en conservant le même nombre de bornes de sortie que dans un capteur connu à 3 bits.

Selon la présente invention, ce but est atteint par le fait que chacun desdits groupes est subdivisé en sous-groupes comportant chacun au moins deux bobines élémentaires connectées électriquement en série, deux sous-groupes adjacents d'un même groupe étant connectés électriquement en opposition.

Avec une telle disposition et une telle connexion des bobines élémentaires de l'enroulement secondaire du capteur, les trois signaux de sortie du capteur varient en fonction de la position de l'élément mobile de manière à ce qu'à chaque position de l'élément mobile corresponde un point situé sur un flanc montant ou descendant, correspondant à une variation sensiblement linéaire de l'un des signaux de sortie entre une valeur basse et une valeur haute pouvant être prises par ce signal.

Le nombre de bobines élémentaires connectées en série à l'intérieur de chacun des sous-groupes est de préférence compris entre 3 et 6.

Pour améliorer la précision de la mesure, il est possible de décaler latéralement les bobines d'extrémité d'un sous-groupe de manière à les imbriquer dans les sous-groupes adjacents des autres groupes. Ceci permet d'obtenir un chevauchement des flancs montant ou descendant des courbes correpondant à deux signaux de sortie et d'améliorer la précision de la mesure aux points de croisement des courbes.

Selon l'invention il est également possible d'améliorer encore la précision de la mesure en tenant compte de l'influence de la température.

Selon un développement de l'invention, le dispositif détecteur est doté de moyens simples permettant de fournir une indication sûre lorsque la barre est en position chutée.

Le dispositif de détection de barre chutée est constitué par une pluralité d'enroulements secondaires auxiliaires coaxiaux, superposés, de faible longueur axiale, disposés à la partie inférieure du capteur et connectés à une pluralité d'ensembles de traitement indépendants.

Dans un mode de réalisation préférentiel, le dispositif de détection de barre chutée comporte trois enroulements secondaires auxiliaires superposés, le dispositif de traitement et chacun des trois ensembles de traitement étant respectivement connectés à des groupes indépendants de protection pour arrêt d'urgence.

En cas de défaillance de l'alimentation de l'enroulement primaire, un des enroulements secondaires auxiliaires est alimenté de manière à se substituer à l'enroulement primaire pour créer le champ magnétique permettant la détection par les autres enroulements secondaires de la chute de la barre.

D'autres avantages et caractéristiques de l'invention ressortiront de la description qui va suivre de différents modes de mise en oeuvre de l'invention donnés à titre d'exemples non limitatifs et représentés aux dessins annexés, sur lesquels :

    – la figure 1 représente un schéma de connexion des bobines primaires et secondaires d'un capteur de position selon l'invention ;

– la figure 2 illustre les différentes courbes théoriques de variation des signaux de tension délivrés par les groupes de bobines secondaires de la figure 1 ;

– la figure 3 représente une variante du schéma selon la figure 1 ;

– la figure 4 illustre la variation des courbes selon la figure 2 en fonction de la température ;

– la figure 5 représente les courbes des signaux de sortie obtenus expérimentalement avec un capteur de position selon la figure 3 ;

– les figures 6 et 7 représentent deux variantes de connexion des bobines d'un capteur de position selon l'invention, comportant respectivement 31 et 40 bobines secondaires ;

– la figure 8 représente, de façon schématique, un dispositif de détection de la position d'une barre de contrôle d'un réacteur nucléaire, comportant un dispositif de détection de barre chutée ;

– la figure 9 représente l'enroulement primaire, les enroulements secondaires auxiliaires et les ensembles de traitement associés d'un dispositif selon la figure 8 ;

– la figure 10 représente le signal de sortie d'un enroulement secondaire auxiliaire d'un dispositif selon la figure 9, en fonction de la position de la barre de contrôle ; et

– la figure 11 représente plus en détail, sous forme de schéma-bloc, un ensemble de traitement selon la figure 9.

Le capteur selon l'invention est destiné à détecter, sans aucun contact mécanique, la position d'un élément mobile (non représenté) en matériau magnétique susceptible de se déplacer linéairement suivant un axe.

Le capteur est du type à transformateur, c'est à dire comportant un enroulement primaire 10 et un enroulement secondaire 12, coaxiaux, entourant ledit axe sur toute la trajectoire de l'élément mobile. L'enroulement primaire 10 est alimenté par une source de courant alternatif de manière à engendrer un flux inducteur constant à l'intérieur de cet enroulement 10, le couplage entre les deux enroulements, et donc la tension induite dans l'enroulement secondaire, variant en fonction de la position de l'élément mobile et pouvant en conséquence constituer une mesure de cette position. Il est évident qu'il suffit que la partie de l'élément mobile couvrant l'ensemble de sa course soit en matériau magnétique.

Des capteurs de ce type sont bien connus et sont décrits notamment dans le brevet français No. 2.169.437 et dans son certificat d'addition No. 2.182.400, auxquels on pourra se référer pour une description plus détaillée du fonctionnement d'un tel capteur.

Comme dans le certificat d'addition précité, l'enroulement secondaire 12 du capteur selon l'invention est constitué par une pluralité de bobines, toutes identiques, réparties régulièrement le long de la trajectoire de déplacement de l'élément mobile et reliées électriquement entre elles de manière à former plusieurs groupes.

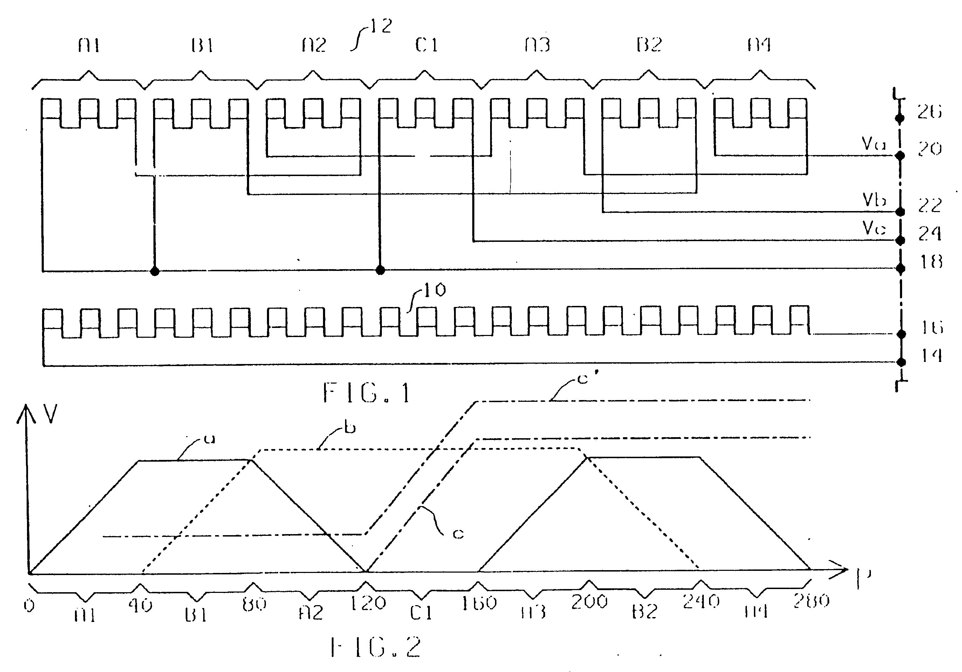

Dans les modes de réalisation préférés représentés sur les figures 1, 3, 6 et 7, l'enroulement primaire 10 est constitué par une pluralité de bobines connectées électriquement en série entre deux bornes d'entrée 14 et 16 et intercalées entre les bobines secondaires.

Comme représenté sur la figure 1, l'enroulement secondaire 12 du capteur comporte trois groupes de bobines A, B et C dont une extrémité est reliée à une borne de sortie commune 18, tandis que les autres extrémités des groupes A, B et C sont connectées respectivement à trois bornes de sorties distinctes 20, 22 et 24, de manière à engendrer trois signaux de sortie Va, Vb et Vc distincts.

Le groupe A est constitué par 4 sous-groupes A1, A2, A3 et A4, le groupe B par 2 sous-groupes B1 et B2 et le groupe C par un sous-groupe unique C1. Les sous- groupes A1 et A2 sont connectés électriquement en opposition pour constituer un couple produisant un signal différentiel, les sous-groupes A3 et A4 étant également connectés en opposition pour constituer un second couple produisant un second signal différentiel.

Comme représenté sur la figure, les deux couples A1, A2 et A3, A4, du groupe A sont de préférence reliés en opposition les uns aux autres, de manière à éviter d'additionner les signaux résiduels non nuls de chacun des couples.

De manière analogue, les sous-groupes B1 et B2 du groupe B sont connectés électriquement en opposition.

Une telle connexion des bobines de l'enroulement secondaire a déjà été décrite dans le certificat d'addition 2182400 précité, dans lequel le dispositif de traitement des signaux de sortie du capteur transforme ces signaux en signaux numériques formant un code logique, le code GRAY, au moyen de déclencheurs à seuil permettant de détecter le passage de l'un des signaux de sortie d'un état logique à un autre. De cette manière le dispositif de traitement dispose, pour un enroulement secondaire constitué de trois groupes de bobines A, B et C connectées de la manière indiquée ci-dessus, d'une information codée sur 3 bits représentative de la position de l'élément mobile, ce qui permet de déterminer huit positions de l'élément mobile.

Une telle précision n'est généralement pas suffisante en pratique, surtout aux extrémités des capteurs, et il a été proposé d'augmenter la précision en augmentant le nombre de groupes de bobines de l'enroulement secondaire et en transmettant une information codée sur un nombre supérieur de bits. Cependant une augmentation du nombre de bits implique une augmentation du nombre de fils, ce qui pose des problèmes de connexion.

La présente invention permet d'obtenir une précision supérieure à celle qu'il serait possible d'obtenir avec une information codée sur 5 bits tout en conservant le même nombre de bornes que dans un capteur à 3 bits, à savoir les deux bornes 14 et 16 d'entrée de l'enroulement primaire, les 4 bornes 18, 20, 22 et 24 de sortie de l'enroulement secondaire, et une borne 26 à laquelle est reliée la masse mécanique du capteur, soit au maximum 7 bornes.

Pour cela chaque sous-groupe (A1, A2, A3, A4, B1, B2 et C1) de bobines de l'enroulement secondaire 12 est constitué d'une pluralité de bobines élémentaires connectées électriquement en série à l'intérieur du sous-groupe. Dans le mode de réalisation préférentiel représenté sur la figure 1, chacun des sous-groupes comporte 3 bobines élémentaires.

Bien entendu, il est possible d'augmenter le nombre de bobines élémentaires de chaque sous-groupe, ce qui permet d'améliorer encore la précision de la mesure. Cependant, pour une application donnée, le nombre total de bobines élémentaires pouvant être disposées le long de la trajectoire de l'élément mobile est limité. A titre d'exemple, un capteur de position utilisé pour le contrôle de la position des barres d'un réacteur nucléaire comporte en pratique entre 20 et 40 bobines dans l'enroulement secondaire. Lorsque ces bobines sont divisées en sept sous-groupes connectés de manière à former 3 groupes pour engendrer 3 signaux de sortie formant un code logique, par exemple un code GRAY, le nombre maximal de bobines élémentaires dans chaque sous-groupe ne peut dépasser 6.

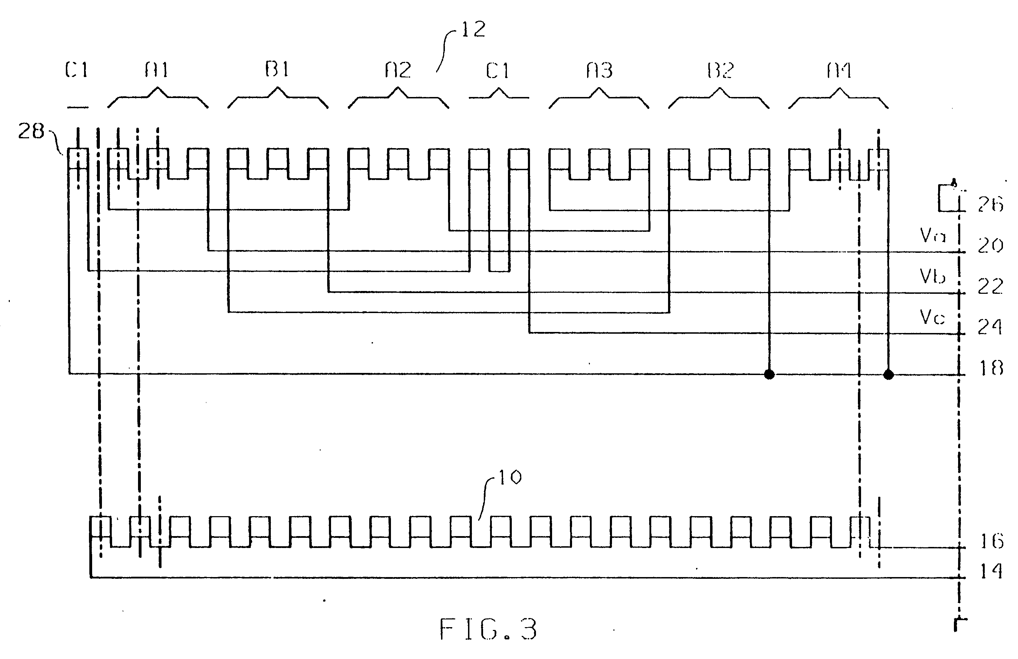

La figure 2 représente les signaux de tension induits dans les différents groupes (A, B et C) de l'enroulement secondaire 12 en fonction de la position de l'élément mobile, l'enroulement primaire 10 étant alimenté par une source de courant alternatif constant.

La courbe a, en trait plein, représente en fonction de la position de l'élément mobile, le signal de tension Va présent entre la borne 20 de sortie des bobines du groupe A et la borne de sortie commune 18. Sur la figure 2 la position de l'élément mobile est exprimée en nombre de pas "p", cette grandeur étant celle classiquement utilisée pour représenter la course d'une barre de commande d'un réacteur nucléaire.

La courbe b, en pointillé, représente le signal de tension Vb présent entre la borne de sortie commune 18 et la borne 22 de sortie des bobines du groupe B, tandis que la courbe c représente le signal de tension Vc présent entre la borne de sortie commune 18 et la borne 24 de sortie des bobines du groupe C.

Il ressort clairement de la figure 2 qu'à chaque position de l'élément mobile correspond un point situé sur un flanc montant ou descendant de l'une des courbes a, b ou c. Cette caractéristique est utilisée par un dispositif (non représenté) de traitement des signaux Va, Vb et Vc de sortie du capteur de position pour déterminer avec précision la position de l'élément mobile. Le dispositif de traitement utilise la variation sensiblement linéaire de chacun des signaux de sortie Va, Vb et Vc lorsque l'élément mobile se déplace en regard des bobines élémentaires d'un sous-groupe correspondant du groupe associé au signal considéré.

A tout instant les 3 signaux Va, Vb et Vc sont appliqués au dispositif de traitement. Dans un mode de réalisation préférentiel les 3 signaux de sortie Va, Vb et Vc sont multiplexés, puis convertis en signaux numériques et sérialisés pour être appliqués à un dispositif numérique de traitement, ce dernier comportant de préférence un ordinateur central comportant en mémoire des tables de correspondance, obtenues expérimentalement, entre les valeurs des signaux et la position de l'élément mobile.

Le dispositif de traitement combine, de façon logique, les informations qui lui sont fournies par les 3 signaux de sortie Va, Vb et Vc, de manière à déterminer en regard de quel sous-groupe se trouve l'élément mobile, et donc sur quel flanc, montant ou descendant, se trouve le signal à prendre en considération pour la détermination précise de la position de l'élément mobile.

A titre d'exemple, si les signaux Vb et Vc sont tous deux au niveau bas, la valeur associée de Va se trouve sur le premier flanc montant de la courbe a, correspondant au sous-groupe A1. Par contre, si Vb est au niveau haut, Vc restant au niveau bas, le dispositif de traitement est en mesure de déterminer que la valeur de Va se trouve sur le premier flanc descendant de la courbe a, correspondant au sous-groupe A2.

Comme représenté sur la figure 2, le capteur selon l'invention permet d'obtenir une réponse quasi-linéaire à l'intérieur d'un intervalle de déplacement de l'élément mobile correspondant à un sous-groupe, soit 40 pas dans le mode de réalisation représenté, ce qui permet d'obtenir une précision de mesure très supérieure à celle pouvant être obtenue avec un capteur à 3 bits de sortie selon le certificat d'addition précité, la précision étant de 40 pas, pour un déplacement maximal de 280 pas, dans ce dernier.

La stabilité de la mesure obtenue avec le capteur décrit ci-dessus est relativement bonne en raison de la connexion en opposition par couples des sous-groupes de chacun des groupes de manière à délivrer un signal différentiel de valeur nulle pour toute position de l'élément mobile engendrant un même couplage inductif entre l'enroulement primaire et chacun desdits sous-groupes du couple.

Il est néanmoins souhaitable de prévoir une correction de la mesure en fonction de la température, de manière à améliorer encore la précision de cette mesure.

Selon une première méthode de correction, une bobine supplémentaire 28, dite bobine basse, est disposée à l'entrée du capteur de manière à être traversée en permanence par l'élément mobile. Cette bobine basse est incorporée au sous-groupe C1, c'est à dire qu'elle est électriquement connectée en série avec les autres bobines du sous-groupe C1, ce qui provoque un décalage vers le haut de la courbe c, comme représenté en c' sur la figure 2.

Comme représenté sur la figure 3, il est possible de ne pas modifier le nombre total de bobines du capteur en réduisant d'une unité le nombre de bobines du groupe C1 disposées dans la partie médiane du capteur entre les bobines des sous-groupes A2 et A3, et en utilisant la bobine ainsi libérée pour former la bobine basse 28. Dans cas, le sous-groupe C1 comporte toujours 3 bobines connectées électriquement en série, mais l'une d'entre elles (28) a été décalée latéralement de manière à constituer la bobine basse.

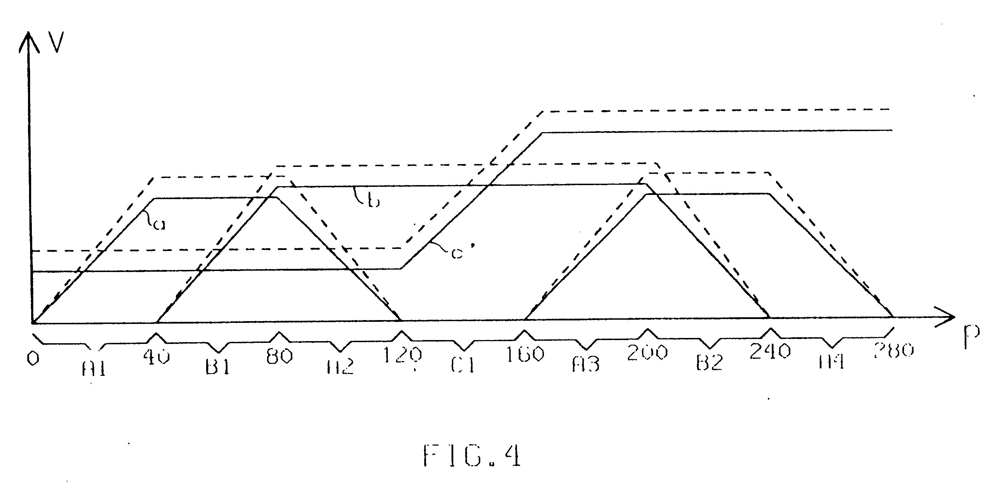

La figure 4 illustre la variation des courbes a, b et c' selon la figure 2 en fonction de la température. Les courbes en trait plein représentent les valeurs de Va, Vb et Vc à froid, à une première température prédéterminée, par exemple 25°C, tandis que les courbes en pointillé représentent les valeurs des mêmes signaux à chaud, à une seconde température prédéterminée, par exemple 100°C.

Il ressort clairement de ces courbes que l'écart dû à une variation de température est maximal d'une part pour la courbe c' et d'autre part pour les courbes a et b lorsque l'élément mobile traverse complètement le premier sous-groupe d'un couple (A1, B1 ou A3) et n'a pas encore atteint le second sous-groupe associé (respectivement A2, B2 ou A4), c'est à dire lorsque les signaux Va ou Vb ont atteint leur valeur haute correspondant aux paliers supérieurs des courbes a et b.

Des courbes d'étalonnage préenregistrées à chaud, par exemple pour une température prédéterminée de 100°C, étant mises en mémoire dans l'ordinateur central, celui-ci compare la valeur des signaux Va, Vb et Vc de sortie du capteur avec les courbes d'étalonnage, détermine à partir du résultat de cette comparaison, la température au moment de la mesure et la correction à apporter au signal mesuré.

La bobine basse 28 permet d'obtenir une bonne correction de température à l'extrémité inférieure du capteur, la valeur basse du signal Vc (courbe c') étant influencée essentiellement par la température du capteur.

Pour améliorer la précision de la correction de température on utilise de préférence pour chaque position de l'élément mobile l'information fournie par le palier le plus proche en amont de ladite position. Ainsi, on compare la courbe c' à la courbe d'étalonnage correspondante pour la correction des signaux Va situés sur le premier flanc de montée de la courbe a, puis la courbe a à la courbe d'étalonnage correspondante pour la correction des signaux Vb situés sur le flanc de montée de la courbe b, puis la courbe b pour la correction des signaux situés sur le premier flanc descendant de la courbe a, le flanc montant de la courbe c' et le second flanc montant de la courbe a, puis de nouveau la courbe a pour la correction des signaux situés sur le flanc descendant de la courbe b, et enfin la courbe c' pour la correction des signaux situés sur le second flanc descendant de la courbe a.

Dans la partie supérieure du capteur on peut, en pratique, simplifier la correction en utilisant exclusivement l'information fournie par la courbe c', le gradient maximal de température étant beaucoup moins important que dans la partie inférieure du capteur.

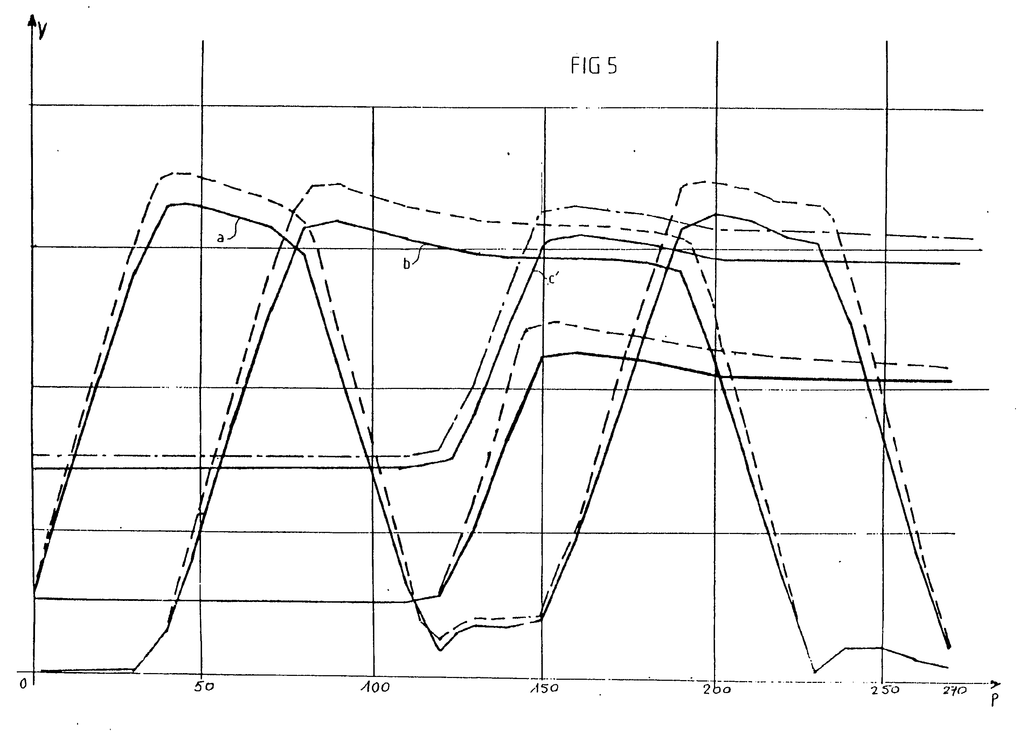

La figure 5 représente les courbes a, b et c' obtenues expérimentalement avec un capteur de position selon la figure 3, les courbes en trait plein étant obtenues lors d'essais à froid et les courbes en pointillé lors d'essais à chaud.

Selon une seconde méthode de correction, toute variation, en fonction de la température, du niveau de la tension de sortie d'un enroulement secondaire est compensée automatiquement, au moins partiellement. En effet, si la tension secondaire croît sensiblement linéairement avec la température, avec un coefficient de proportionnalité qui peut être mesuré expérimentalement, la résistance du bobinage, en cuivre, du secondaire croît également, avec un coefficient de proportionnalité différent du premier, conduisant à une atténuation du signal. Pour obtenir une bonne correction on cherche à compenser l'augmentation, due au système, de la tension avec la température par l'atténuation due à l'augmentation de la résistance du cuivre. Pour tenir compte des coefficients de proportionnalité différents, on connecte une résistance de compensation (non représentée) en parallèle sur l'enroulement secondaire, la valeur de cette résistance étant calculée en tenant compte de la résistance à froid de l'enroulement secondaire et des coefficients de variation en fonction de la température de la tension d'une part et de la résistance du cuivre d'autre part. A titre d'exemple non limitatif on peut montrer que pour une tension de sortie d'un groupe pouvant s'exprimer sous la forme :

$V = Vo(1 + 10^{-3} t)$, où Vo est la tension à froid (à 25°) et t la température en °C, le coefficient de variation de la résistance du cuivre étant de $4 \times 10^{-3}/°C$,

on obtient une bonne compensation en température avec une résistance de compensation égale à 3 fois la résistance à froid du bobinage secondaire correspondant.

Les deux méthodes de correction peuvent coexister, l'une compensant les imperfections de l'autre.

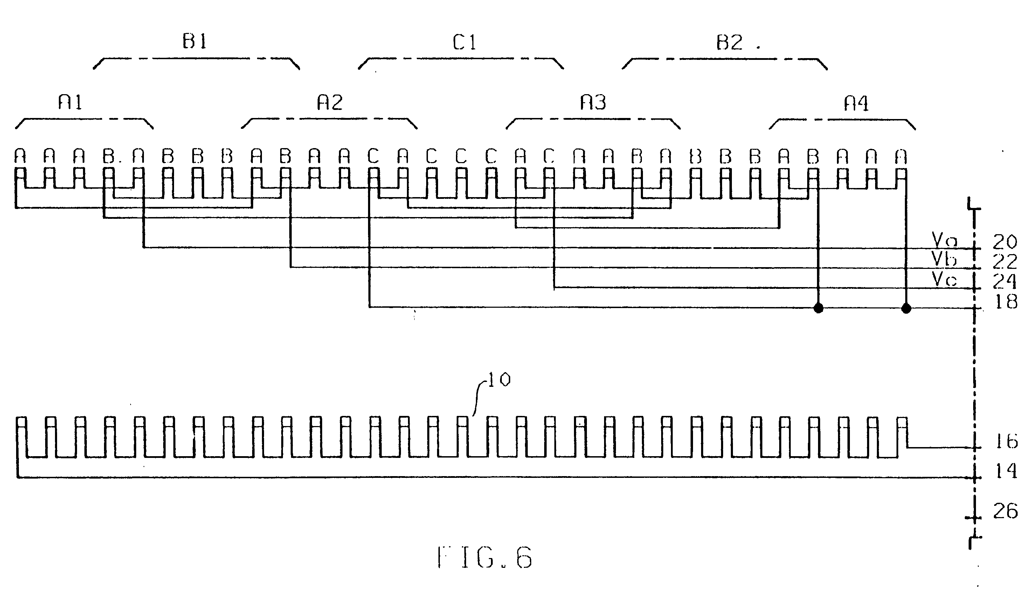

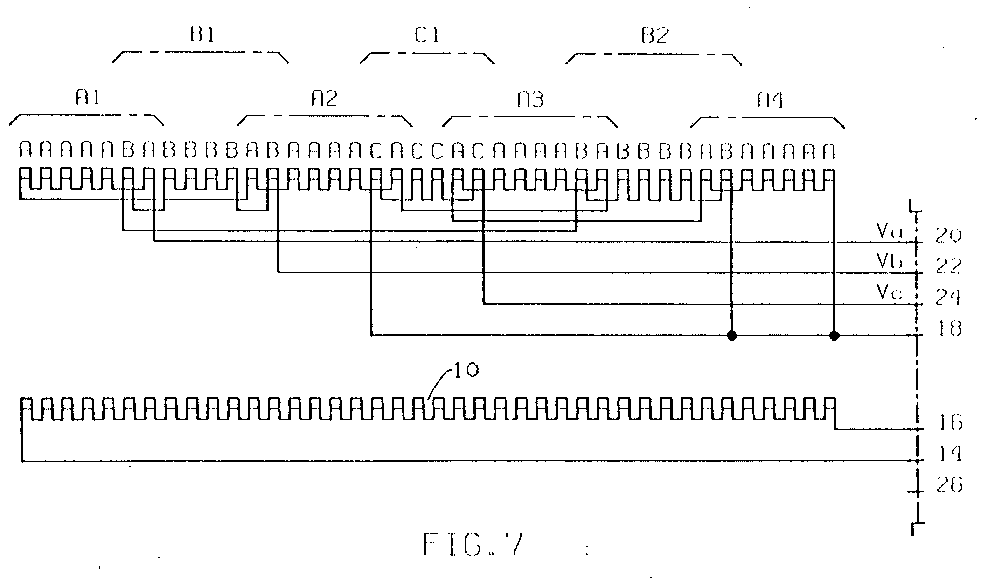

Les modes de réalisation représentés sur les figures 6 et 7 permettent d'améliorer la précision aux croisements des courbes, c'est à dire au passage d'un flanc à un autre. Pour celà on décale les bobines d'extrémités de chacun des sous-groupes de manière à les imbriquer dans le sous-groupe adjacent.

A titre d'exemple, la figure 6 représente un capteur dans lequel l'enroulement secondaire 12 comporte 31 bobines élémentaires. Comme représenté sur la figure chacun des sous-groupes B1, B2 et C1 comporte 5 bobines élémentaires, chacun des sous-groupes A1, A2, A3 et A4 du groupe A comportant 4 bobines élémentaires. La première bobine du sous-groupe B1 est disposée entre les troisième et quatrième bobines du sous-groupe A1, de sorte que la dernière bobine de A1 est disposée entre les première et seconde bobines de B1. Il en est de même pour tous les sous-groupes. Typiquement, on obtient la succession suivante : une première bobine d'extrémité d'un sous-groupe donné (par exemple A3) suivie par une bobine du sous-groupe précédent (C1), les bobines centrales (2 dans le cas du sous-groupe A3) du sous-groupe donné (A3), une bobine d'extrémité du sous-groupe suivant (B2) et enfin la seconde bobine d'extrémité du sous-groupe donné (A3). De cette manière les bobines d'extrémité de chacun des sous-groupes sont imbriquées dans les sous-groupes adjacents et il y a superposition des flancs des courbes a, b et c aux points de croisement de ces courbes.

Bien entendu le dispositif de traitement doit tenir compte de cette imbrication.

De manière analogue, la figure 7 représente un capteur dont l'enroulement secondaire comporte 40 bobines élémentaires, chacun des sous-groupes des groupes A et B comportant 6 bobines élémentaires et le sous-groupe C1 comportant 4 bobines élémentaires. A titre d'exemple, si l'on considère le sous-groupe A2 dans ce mode de réalisation particulier, sa première bobine d'extrémité est séparée de ses 4 bobines centrales par une bobine d'extrémité du sous-groupe B1, et une bobine d'extrémité du sous-groupe C1 est intercalée entre les bobines centrales et la seconde bobine d'extrémité du sous-groupe A2.

La précision de la mesure pouvant être obtenue au moyen d'une combinaison des différentes caractéristiques décrites ci-dessus rend un tel capteur particulièrement adapté à une utilisation dans des conditions exceptionnelles, notamment dans les réacteurs nucléaires. Bien entendu, la présente invention n'est en aucune manière limitée à cette application particulière, mais peut au contraire être utilisée pour toute mesure, sans contact mécanique, de la position d'un élément mobile nécessitant une bonne précision de mesure.

Selon un développement de l'invention, le capteur peut être doté d'un dispositif de détection de barre chutée.

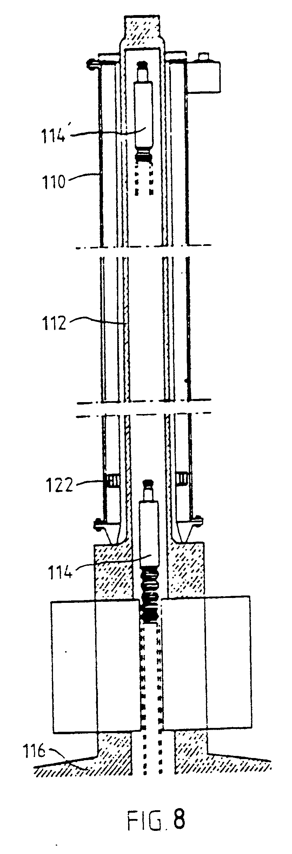

La figure 8 représente un capteur de position 110 disposé concentriquement autour d'une gaine étanche 112 dans laquelle se déplace la tige d'entraînement 114 d'une barre de contrôle d'un réacteur dont seule la partie supérieure 116 de la cuve est illustrée sur la figure. La tige d'entraînement se déplace entre une position basse, représentée en trait plein sur la figure et une position haute représentée, en pointillé (en 114').

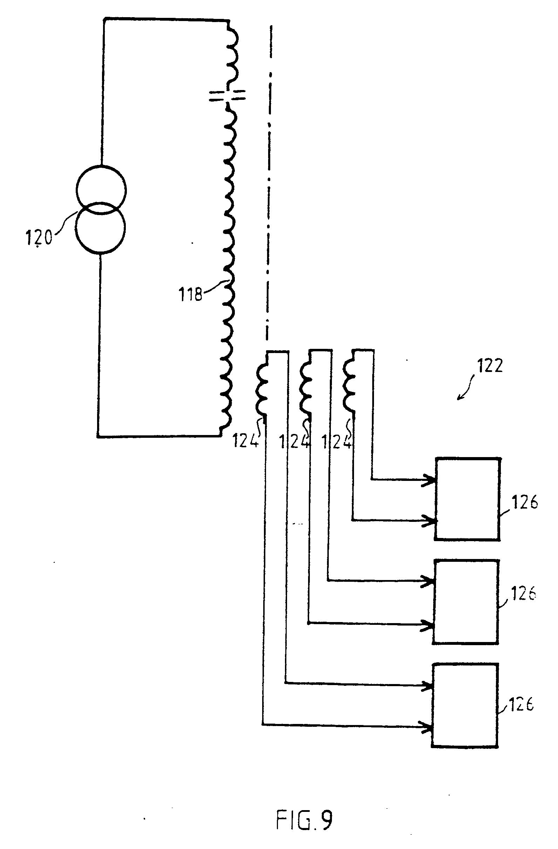

Le capteur de position 110 est du type décrit ci-dessus. Seul son enroulement primaire 118 alimenté en courant alternatif constant par une source d'alimentation 120, étant représenté sur la figure 9, l'enroulement secondaire (non représenté) délivrant à un dispositif de traitement (non représenté) des signaux de tension représentatifs de la position de la barre de contrôle. Les enroulements primaire et secondaire sont répartis régulièrement autour de la gaine 112 sur toute la longueur de déplacement de la tige 114.

Le dispositif 122 de détection de barre chutée est constitué par plusieurs, de préférence trois, enroulements secondaires auxiliaires 124 superposés, de faible longueur axiale, disposés à la partie inférieure du capteur 110.

Chacun des enroulements secondaires auxiliaires 124 est relié à un ensemble de traitement indépendant 126.

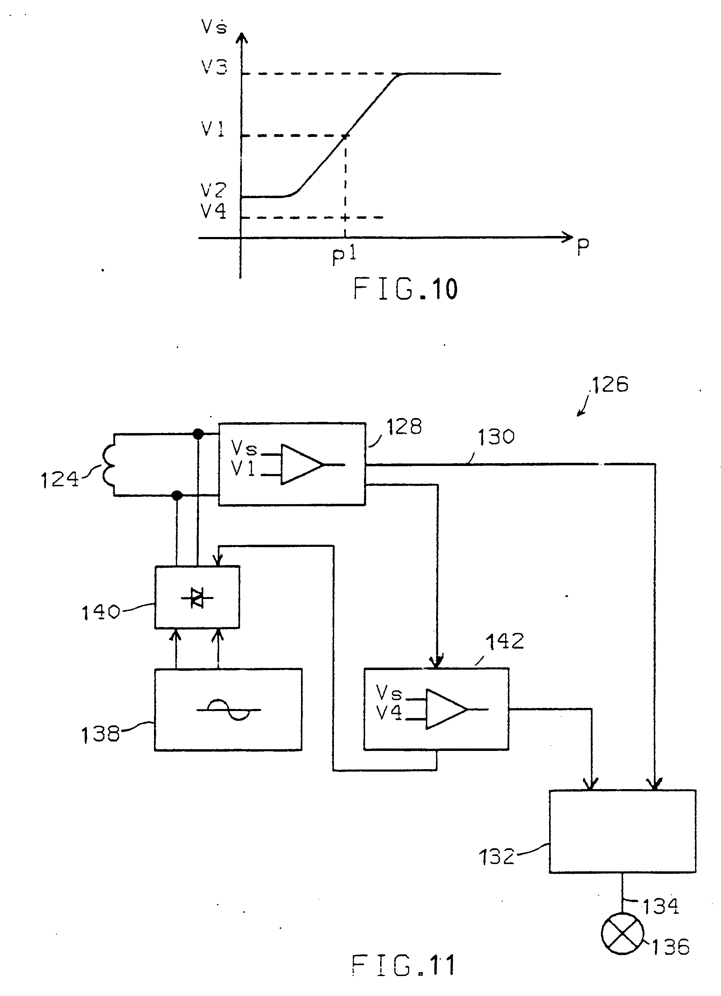

En fonctionnement normal, barre non chutée, l'enroulement primaire est alimenté en courant alternatif constant, et la position de la barre de contrôle est fournie par les signaux de sortie de l'enroulement secondaire. Les signaux Vs de sortie des enroulements secondaires auxiliaires, appliqués aux ensembles de traitement associés 126, sont alors supérieurs à un seuil haut V1 (figure 10).

On obtient ainsi quatre informations indépendantes, à savoir la sortie de l'enroulement secondaire du capteur, et les trois sorties des enroulements secondaires auxiliaires, qui sont appliquées respectivement au dispositif de traitement des signaux de sortie de l'enroulement secondaire du capteur et aux trois ensembles indépendants de traitement 126. Ces quatre informations sont transmises par les dispositif et ensembles de traitement associés à quatre groupes de protection pour arrêt d'urgence indépendants, dont les sorties sont combinées logiquement dans un dispositif central de contrôle. Le dispositif central de contrôle considère par exemple que la barre est tombée lorsqu'au moins deux informations indépendantes concernant cette barre correspondent à un signal de barre chutée. De cette manière, on obtient un système redondant offrant une grande fiabilité.

Toujours en fonctionnement normal, en position barre chutée, les signaux Vs de sortie des enroulements secondaires auxiliaires sont inférieurs au seuil haut V1. La figure 10 illustre la courbe de variation du signal Vs autour du seuil haut V1, en fonction de la position p de la barre de contrôle, autour d'une position p1.

Le signal Vs passe d'une valeur inférieure V2, correspondant à la position barre chutée, à une valeur supérieure V3 pour laquelle les enroulements secondaires auxiliaires 124 sont complètement traversés par la tige d'entraînement 114. A titre d'exemple, nullement limitatif, le déplacement p de la barre de contrôle étant exprimé en nombre de pas, grandeur utilisée classiquement pour représenter la course d'un barre de contrôle d'un réacteur nucléaire, la position p1 correspond au pas n° 10, la course totale correspondant à 270 pas.

Le seuil V1 de détection de la position barre chutée est compris entre les valeurs V2 et V3 comme représenté sur la figure 10.

En cas de défaillance de l'alimentation de l'enroulement primaire, la tension Vs de sortie des enroulements secondaires auxiliaires 124 descend au-dessous d'un seuil V4, inférieur à la valeur inférieure V2 pouvant être prise par la tension Vs en fonctionnement normal.

Le dispositif selon l'invention utilise cette caractéristique pour détecter une telle défaillance et y pallier, de manière à ce que, bien que la position de la barre de contrôle ne puisse plus être déterminée par le capteur de position, celui-ci détecte néanmoins, avec une bonne fiabilité, la position barre chutée.

En cas de défaillance de l'alimentation de l'enroulement primaire, cette défaillance est détectée dans le dispositif de traitement (non représenté) et dans chacun des ensembles 126 de traitement et l'un des enroulements secondaires auxiliaires 124 est alimenté par l'intermédiaire de l'ensemble de traitement associé de manière à se substituer à l'enroulement primaire, les autres enroulements secondaires auxiliaires fournissant alors, de même que l'enroulement secondaire du capteur, une information de barre chutée.

Bien que le nombre d'informations indépendantes soit ramené de quatre à trois, il est clair que la fiabilité de cette détection de barre chutée reste tout à fait satisfaisante.

Comme représenté sur la figure 11, un ensemble de traitement 126 comporte un circuit 128 connecté aux bornes d'un enroulement secondaire auxiliaire 124. Ce circuit 128, après avoir filtré la tension Vs de sortie de l'enroulement 124, compare ce signal au seuil V1 et délivre, sur un conducteur 130 de sortie, un signal lorsque la tension de sortie Vs est inférieure au seuil V1. Ce signal est appliqué à un circuit logique 132 destiné à délivrer, sur un conducteur 134, relié à une alarme 136, de tout type approprié, un signal de barre chutée.

L'ensemble 126 comporte de plus un générateur de courant alternatif 138, connecté aux bornes de l'enroulement secondaire auxiliaire 124 par l'intermédiaire d'un commutateur statique 140, qui peut par exemple être constitué par un triac. En fonctionnement normal, le commutateur statique 140 est ouvert et l'enroulement 124 remplit la fonction d'un enroulement secondaire.

L'ensemble 126 comporte un circuit 142 de commande du commutateur statique 140. Ce circuit 142 compare la tension Vs au seuil V4 et délivre, après une période de temporisation prédéterminée, un signal de fermeture du commutateur statique lorsque la tension Vs est inférieure au seuil V4, ce qui correspond à une défaillance du circuit d'alimentation de l'enroulement primaire.

Le circuit 142 signale également cette défaillance au circuit logique 132 de manière à ce que celui-ci n'interprète pas comme une information de barre chutée, la détection par le circuit 128 d'une tension Vs inférieure au seuil V1, lorsque la tension Vs est également inférieure au seuil V4. Ainsi le signal de barre chutée n'est délivré sur le conducteur 134 que lorsque la tension Vs est inférieure à V1 mais supérieure à V4.

Les périodes de temporisation des circuits de commande 142 ont des valeurs prédéterminées différentes pour chacun des ensembles de traitement 126. Ainsi, en cas de défaillance de l'alimentation de l'enroulement primaire, c'est toujours le même enroulement secondaire auxiliaire, prioritaire, dont la période de temporisation est la plus courte, qui prend le relais de l'enroulement primaire. Dès que cet enroulement prioritaire est alimenté, la tension Vs aux bornes des différents enroulements secondaires, qui lui sont superposés, remonte au-dessus du seuil V4 et les circuits de commande 142 des autres enroulements secondaires interrompent leur temporisation et maintiennent ouverts leurs commutateurs statiques.

Bien entendu, si l'alimentation de l'enroulement secondaire auxiliaire prioritaire vient à être défaillante, cette défaillance est également détectée par tous les circuits de traitement 126, la tension Vs devenant inférieure à V4. Le circuit de commande 142 mémorise une telle défaillance, empêchant l'alimentation de l'enroulement prioritaire, de sorte que c'est l'enroulement secondaire auxiliaire ayant la période de temporisation immédiatement supérieure qui prend le relais.

Si deux des alimentations des enroulements secondaires auxiliaires viennent à être défaillants, l'alimentation du troisième, qui a la période de temporisation la plus longue, prend le relais.

De cette manière, la détection de barre chutée reste assurée tant qu'au moins l'une des alimentations est en état de fonctionner, utilisant au mieux la redondance des enroulements.

## Revendications

1. Dispositif de détection, sans aucun contact mécanique, de la position d'un élément mobile suivant une trajectoire prédéterminée, comportant un capteur de position comportant un enroulement primaire (10) alimenté par une source de courant alternatif et un enroulement secondaire (12) couplé inductivement avec ledit enroulement primaire, ledit élément mobile présentant une partie magnétique suceptible de modifier le couplage inductif entre lesdits enroulements au cours de son déplacement, l'enroulement secondaire (12) étant constitué par trois groupes (A, B, C) de bobines élémentaires disposées et connectées de manière à engendrer trois signaux de sortie (Va, Vb, Vc) distincts destinés à être appliqués à un dispositif de traitement et dont la combinaison logique permet de déterminer la position dudit élément mobile, dispositif caractérisé en ce que chacun desdits groupes (A, B, C) est subdivisé en sous-groupes (A1, A2, A3, A4, B1, B2, C1) comportant chacun au moins deux bobines élémentaires connectées électriquement en série, deux sous-groupes adjacents d'un même groupe étant connectés électriquement en opposition.

2. Dispositif selon la revendication 1, caractérisé en ce qu'un premier groupe (A) de bobines de l'enroulement secondaire (12) est subdivisé en quatre sous-groupes (A1, A2, A3, A4) connectés deux à deux en opposition, le second groupe (B) étant subdivisé en deux sous-groupes (B1, B2) connectés en opposition, le troisième groupe (C) comportant un seul sous-groupe (C1) disposé dans la partie médiane du capteur, les sous-groupes des premier et second groupes étant répartis régulièrement le long de la trajectoire de l'élément mobile de part et d'autre du troisième groupe avec une imbrication des différents groupes.

3. Dispositif selon l'une des revendications 1 et 2, caractérisé en ce que chaque sous-groupe comporte 3 à 6 bobines élémentaires en série.

4. Dispositif selon la revendication 3, caractérisé en ce que les bobines d'extrémité d'un sous-groupe sont décalées latéralement de manière à être imbriquées dans les sous-groupes adjacents des autres groupes.

5. Dispositif selon l'une quelconque des revendications 1 à 4, caractérisé en ce qu'une bobine élémentaire (28) est disposée à l'entrée du capteur de manière à être traversée en permanence par l'élément mobile, et est connectée en série avec les bobines élementaires du sous-groupe (C1) disposé dans la partie médiane du capteur.

6. Dispositif selon l'une quelconque des revendications 1 à 5, caractérisé en ce que le dispositif de traitement effectue une correction de la mesure en fonction de la température après avoir comparé aux valeurs correspondantes d'une courbe préenregistrée à une température prédéterminée les valeurs atteintes par le signal de sortie (Va, Vb, ou Vc) associé à l'un des groupes (A, B ou C) lorsque l'extrémité de l'élément mobile n'est pas en regard de l'un des sous-groupes de ce groupe.

7. Dispositif selon l'une quelconque des revendications 1 à 6, caractérisé en ce qu'une résistance de compensation est disposée en parallèle sur chaque groupe (A, B, C) de l'enroulement secondaire, de manière à compenser automatiquement les variations en fonction de la température de la tension de sortie du groupe associé.

8. Dispositif selon l'une quelconque des revendications 1 à 7, dans lequel l'élément mobile est constitué par la tige d'entraînement d'une barre de contrôle d'un réacteur nucléaire, caractérisé en ce qu'il comporte un dispositif (122) de détection de barre chutée constitué par une pluralité d'enroulements secondaires auxiliaires (124), coaxiaux, superposés, de faible longueur axiale, disposés à la partie inférieure du capteur et connectés à une pluralité d'ensembles de traitement indépendants (126).

9. Dispositif selon la revendication 8, caractérisé en ce que chacun des ensembles de traitement (126) comporte un générateur de courant alternatif (138), connecté aux bornes de l'enroulement secondaire auxiliaire (124) associé par l'intermédiaire d'un commutateur statique (140), des moyens (142) de détection d'un défaut dans l'alimentation de l'enroulement primaire et un dispositif (142) de commande dudit commutateur statique commandant la fermeture de celui-ci, après une période de temporisation prédéterminée, lors de la détection d'un défaut par lesdits moyens de détection.

10. Dispositif selon la revendication 9, caractérisé en ce que lesdits moyens (142) de détection de défaut comportent des moyens de comparaison de la tension (Vs) de sortie de l'enroulement secondaire auxiliaire associé à un premier seuil (V4) prédéterminé, un signal de commande de fermeture étant appliqué audit commutateur statique (140) lorsque la tension de sortie mesurée (Vs) est inférieure au premier seuil (V4), chaque ensemble de traitement (126) comportant des moyens (128) de comparaison de la tension de sortie de l'enroulement auxiliaire associé à un second seuil (V1) prédéterminé, lesdits moyens (128) délivrant un signal de barre chutée lorsque la tension de sortie mesurée (Vs) est inférieure au second seuil (V1).

**Patentansprüche**

1. Detektiervorrichtung, ohne jeglichen mechanischen Kontakt, der Stellung eines beweglichen Elementes gemäss einer vorbestimmten Bahn, mit einem Stellungsfühler, der eine von einer Wechselstromquelle gespeiste Primärwicklung (10) aufweist und eine Sekundärwicklung (12), die induktiv mit der genannten Primärwicklung gekuppelt ist, wobei das bewegliche Element einen magnetischen Teil aufweist, der die induktive Kupplung zwischen den genannten Wicklungen während seiner Bewegung verändern kann, wobei die Sekundärwicklung (12) von drei Gruppen (A, B, C,) von Elementarspulen gebildet wird, die so angeordnet und angeschlossen sind, um drei verschiedene Ausgangssignale (Va, Vb, Vc) zu erzeugen, die dazu bestimmt sind, an eine Verarbeitungsvorrichtung angelegt zu werden, und deren logische Kombination es ermöglicht, die Stellung des genannten beweglichen Elementes zu bestimmen, Vorrichtung, dadurch gekennzeichnet, dass jede der genannten Gruppen (A, B, C) in Untergruppen (A1, A2, A3, A4, B1, B2, C1) unterteilt ist, von denen jede wenigstens zwei elektrisch in Serie geschaltete Elementarspulen aufweist, wobei zwei nebeneinanderliegende Untergruppen einer selben Gruppe elektrisch entgegengesetzt verbunden sind.

2. Vorrichtung nach Anspruch 1, dadurch gekennzeichnet, dass eine erste Spulengruppe (A) der Sekundärwicklung (12) in vier Untergruppen (A1, A2, A3, A4) unterteilt ist, die zweit zu zweit entgegengesetzt geschaltet sind, dass eine zweite Gruppe (B) in zwei entgegengesetzt geschaltete Untergruppen (B1, B2) unterteilt ist, und dass die dritte Gruppe (C) eine einzige Untergruppe (C1) aufweist, die in dem mittleren Teil des Fühlers angeordnet ist, während die Untergruppen der ersten und zweiten Gruppe regelmässig entlang der Bahn des beweglichen Elementes verteilt sind, beiderseits der dritten Gruppe mit einer Ineinanderverschiebung der verschiedenen Gruppen.

3. Vorrichtung nach einem der Ansprüche 1 und 2, dadurch gekennzeichnet, dass jede Untergruppe 3 bis 6 in Serie geschaltete Elementarspulen aufweist.

4. Vorrichtung nach Anspruch 3, dadurch gekennzeichnet, dass die Endspulen einer Untergruppe leicht versetzt sind, um in die anliegenden Untergruppen der anderen Gruppen überzugreifen.

5. Vorrichtung nach irgendeinem der Ansprüche 1 bis 4, dadurch gekennzeichnet, dass eine Elementarspule (28) am Eingang des Fühlers angeordnet ist, um ununterbrochen von dem beweglichen Element durchlaufen zu werden, und dass sie mit den Elementarspulen der im mittleren Teil des Fühlers angeordneten Untergruppe (C1) in Serie geschaltet ist.

6. Vorrichtung nach irgendeinem der Ansprüche 1 bis 5, dadurch gekennzeichnet, dass die Verarbeitungsvorrichtung eine von der Temperatur abhängige Mess-Korrektur vornimmt, nachdem sie die entsprechenden Werte einer mit einer vorgegebenen Temperatur vorher gespeicherten Kurve mit den Werten vergleicht, die von dem Ausgangssignal (Va, Vb oder Vc) erreicht werden, in Verbindung mit einer der Gruppen (A, B, C), wenn das Ende des beweglichen Elementes nicht gegenüber einer der Untergruppen dieser Gruppe liegt.

7. Vorrichtung nach irgendeinem der Ansprüche 1 bis 6, dadurch gekennzeichnet, dass ein Ausgleich-Widerstand parallel auf jeder Gruppe (A, B, C) der Sekundärwicklung angeordnet ist, um automatisch die Schwankungen gemäss der Ausgangsspannungs-Temperatur der zugeordneten Gruppe auszugleichen.

8. Vorrichtung nach irgendeinem der Ansprüche 1 bis 7, in der das bewegliche Element von einer Antriebsstange eines Kontrollstabs eines Kern-Reaktors gebildet wird, dadurch gekennzeichnet, dass sie eine Detektiervorrichtung (122) des gefallenen Stabs aufweist, die von einer Mehrzahl von Hilfs-Sekundärwicklungen (124) gebildet wird, die koachsial, übereinandergelagert, von geringer achsialer Länge, am unteren Teil des Fühlers angeordnet und mit einer Mehrzahl von unabhängigen Verarbeitungseinheiten (126) verbunden sind.

9. Vorrichtung nach Anspruch 8, dadurch gekennzeichnet, dass jede der Verarbeitungseinheiten (126) einen Wechselstrom-Generator (138) aufweist, der mit den Klemmen der mit Hilfe eines statischen Schalters (140) zugeordneten Hilfs-Sekundärwicklung (124) verbunden ist, wobei Detektiermittel (142) eines Fehlers in der Versorgung der Primärwicklung und eine Steuervorrichtung (142) des genannten statischen Schalters das Schliessen des letzteren steuern, nach einer vorbestimmten Verzögerungsperiode, bei Fehlerdetektierung durch die genannten Detektiermittel.

10. Vorrichtung nach Anspruch 9, dadurch gekennzeichnet, dass die genannten Fehler-Detektiermittel (142) Mittel aufweisen zum Vergleichen der Ausgangsspannung (Vs) der Hilfs-Sekundärwicklung, in Verbindung mit einem ersten vorbestimmten Wert (V4), wobei ein Schliess-Steuersignal am genannten statischen Schalter (140) angelegt wird, wenn die gemessene Ausgangsspannung (Vs) unter dem ersten Wert (V4) liegt, und jede Verarbeitungseinheit (126) Vergleichsmittel (128) der Ausgangsspannung der Hilfswicklung aufweist, in Verbindung mit einem zweiten vorbestimmten Wert (V1), und wobei die genannten Mittel (128) ein Signal bei einem gefallenen Stab abgeben, wenn die gemessene Ausgangsspannung (Vs) unter dem zweiten Wert (VI) liegt.

## Claims

1. A detection device, without any mechanical contact, of the position of a movable part according to a predetermined trajectory, comprising a position sensor comprising a primary winding (10) supplied by an alternating current power supply and a secondary winding (12) inductively coupled with said primary winding, said movable part presenting a magnetic part capable of modifying the inductive torque between said windings in the course of its movement, the secondary winding (12) being formed by three groups (A, B, C) of elementary coils arranged and connected in such a way as to generate three distinct output signals (Va, Vb, Vc) designed to be applied to a processing device and the logic combination of which enables the position of said movable part to be determined, a device characterized by the fact that each of said groups (A, B, C) is subdivided into sub-groups (A1, A2, A3, A4, B1, B2, C1) each comprising at least two elementary coils electrically connected in series, two adjacent sub-groups of any one group being electrically connected in opposition.

2. The device according to claim 1, characterized in that a first group (A) of coils of the secondary winding (12) is subdivided into four sub-groups (A1, A2, A3, A4) connected two by two in opposition, the second group (B) being subdivided into two sub-groups (B1, B2) connected in opposition, the third group (C) comprising a single sub-group (C1) located in the mid-part of the sensor, the sub-groups of the first and second groups being located at regular intervals along the trajectory of the movable part on either side of the third group with an overlap of the different groups.

3. The device according to claims 1 and 2, characterized in that each sub-group comprises 3 to 6 elementary coils in series.

4. The device according to claim 3, characterized in that the end coils of a sub-group are shifted laterally so as to overlap on the adjacent sub-groups of the other groups.

5. The device according to one of the claims 1 to 4, characterized in that an elementary coil (28) is located at the input of the sensor so that the movable part passes permanently through it, and that said coil is connected in series with the elementary coils of the sub-group (C1) located in the mid-part of the sensor.

6. The device according to one of the claims 1 to 5, characterized in that the processing device performs a correction of the measurement in terms of the temperature after comparing the values reached by the output signal (Va, Vb or Vc) associated with one of the groups (A, B or C) when the end of the movable part is not facing one of the sub-groups of this group to the corresponding values of a prerecorded curve at a predetermined temperature.

7. The device according to one of the claims 1 to 6, characterized in that a compensating resistance is connected in parallel on each group (A, B, C) of the secondary winding, so as to automatically compensate the variations of the output voltage of the associated group in terms of the temperature.

8. The device according to one of the claims 1 to 7, wherein the movable part is formed by the drive rod of a nuclear reactor control rod, characterized in that it comprises a dropped rod detection device (122) formed by a plurality of superposed coaxial auxiliary secondary windings (124), of small axial length, located in the bottom part of the sensor and connected to a plurality of independent processing units (126).

9. The device according to claim 8, characterized in that each of the processing units (126) comprises an alternating current generator (138), connected to the terminals of the associated auxiliary secondary winding (124) by means of a static switch (140), detection means (142) of a primary winding power supply failure and a control device (142) of said static switch controlling closing of the latter, after a predetermined time delay period, when a fault is detected by said detection means.

10. The device according to claim 9, characterized in that said fault detection means (142) comprise means of comparing the output voltage (Vs) of the associated auxiliary secondary winding with a first predetermined threshold (V4), a closing control signal being applied to said static switch (140) when the measured output voltage (Vs) is lower than the first threshold (V4), each processing unit (126) comprising means (128) of comparing the output voltage of the associated auxiliary winding with a second predetermined threshold (V1), said means (128) delivering a dropped rod signal when the measured output voltage (Vs) is lower than the second threshold (V1).

FIG. 1

FIG. 2

FIG.3

EP 0 308 282 B1

FIG.4

EP 0 308 282 B1

FIG 5

EP 0 308 282 B1

FIG.6

EP 0 308 282 B1

FIG. 7

EP 0 308 282 B1

FIG. 8

FIG.9

FIG.10

FIG.11